# EUROPEAN PATENT SPECIFICATION

(11) **EP 4 309 484 B1**
(45) Date of publication and mention of the grant of the patent: **03.06.2026**
(21) Application number: 22185762.6
(22) Date of filing: 19.07.2022
(51) Int. Cl.: A01D 41/00, B60D 1/14, B62D 13/02

(54) **A WORK VEHICLE COMPRISING A HITCH FOR TOWING A TRAILER**
ARBEITSFAHRZEUG, DAS EINE ANHÄNGERKUPPLUNG ZUM ZIEHEN EINES ANHÄNGERS AUFWEIST
VÉHICULE DE TRAVAIL COMPRENANT UN CROCHET DE REMORQUAGE DE REMORQUE

(43) Date of publication of application: 24.01.2024
(73) Proprietor: CNH Industrial Belgium N.V., 8210 Zedelgem (BE)
(72) Inventor: Vanderstichele, Michiel, 8650 Merkem (BE); De Lathauwer, Tom A., 9340 Lede (BE); Longueville, Stefan, 9990 Maldegem (BE)
(74) Representative: CNH Industrial IP Department

(56) References cited:
- EP-A1- 3 669 624
- US-A1- 2015 210 131
- US-B2- 10 551 832

## Description

### Field of the Invention

The present invention is related to work vehicles, in particular to work vehicles comprising a rear steering axle. A primary example of such a work vehicle to which the invention is applicable, is a combine harvester.

### State of the art.

Combine harvesters are agricultural work vehicles designed to cut crops from a field and process the harvested crops by separating grains from unwanted residue material. The grains are collected in a tank while the residue material is ejected from the harvester, usually after chopping, or laid down as a swath.

The combine is driven through a field on two front wheels or tracks coupled to a front axle and two rear wheels coupled to a rear axle. The rear wheels are the steering wheels of the harvester. The rear axle is pivotable relative to the chassis about a rear-to-front oriented pivot axis, in order to enable driving on an uneven surface without one of the wheels being released from the ground.

Many harvesters are equipped with a means for attaching a trailer or cart to the rear of the harvester, for example a trailer for transporting the detachable header from one field location to another, a chaff cart or a residue post-processing and/or analyzing cart.

The attachment means is usually a hitch attached to the rear of the harvester's chassis. This attachment location of the hitch is suitable when the pivot axis of the rear axle is located on or very close to the line between the centre points of the rear wheels, as is the case in many harvesters known today. However, when the pivot axis is placed higher, the hitch itself is subjected to a considerable pivoting motion relative to the rear axle, and so relative to the ground, which is likely to hinder the towing of a trailer on uneven terrain.

The tendency to place the pivot axis at a higher location is a trend that has become apparent in recent combine designs which include larger rear wheels, requiring a higher pivot location in order to avoid contact between the chassis and the wheels when the steering axle is tilted relative to the chassis.

US 10 551 832 B2 describes coupling the hitch of an autonomous agricultural vehicle with the hitch of an operator-driven agricultural vehicle.

### Summary of the invention

The invention is related to a work vehicle as described in the appended claims, comprising a chassis supported by a front axle and a rear steering axle, i.e. rear steering wheels are coupled to the rear axle while preferably non-steerable front wheels or tracks are coupled to the front axle. In addition, the rear axle is pivotable about a pivot axis oriented in the rear-to-front direction of the vehicle, which may for example be a combine harvester. A work vehicle according to the invention is characterised by the presence of a hitch assembly attached directly to the rear axle, preferably centrally between the rear wheels, the assembly comprising a hitch support and a hitch as such, with the hitch support attached directly to the rear axle, i.e. behaving as a single body together with the rear axle. The hitch support is preferably removably attached to the rear axle, for example by bolt connections. The hitch itself is removably or unremovably fixed to the hitch support.

The invention is particularly useful in work vehicles wherein the rear-to-front pivot axle lies above the line connecting the centre points of the rear wheels. The pivoting of the rear axle relative to the chassis may then be realized by a pivot connection comprising a pivot pin or its equivalent at a given distance above said line between the centre points, or it may be a virtual pivot connection, which enables an even higher location of the pivot axis. According to preferred embodiments involving a 'non-virtual' pivot connection, the distance between the pivot axis and the line between the wheel centre points is preferably higher than 5cm. According to further embodiments, said distance is higher than 15 cm or higher than 30 cm. For a virtual pivot connection, the distance between the virtual pivot axis and the line between the centre points is preferably higher than 30 cm. According to further embodiments, said distance between the virtual pivot axis and the line between the centre points is higher than 50 cm or higher than 70 cm.

The direct connection of the hitch assembly to the rear axle ensures that the hitch assembly does not undergo a pivoting movement relative to the rear axle. The direct connection is also beneficial in terms of the force transfer between the rear axle and the chassis, especially in embodiments comprising actively driven rear wheels : less or no force is transferred via the chassis, overcoming the need for extra reinforcing the chassis for transferring the hitch load.

### Brief description of the figures

Figure 1 is a simplified side view of a combine harvester in accordance with an embodiment of the invention.
Figure 2 is an enlarged view of the rear portion of the harvester shown in Figure 1.
Figure 3 is a rear view of the harvester shown in Figures 1 and 2.
Figure 4 is a rear view of a harvester according to another embodiment of the invention.

### Detailed description of preferred embodiments of the invention

Preferred embodiments will now be described with reference to the drawings. The detailed description is not limiting the scope of the invention, which is defined only by the appended claims.

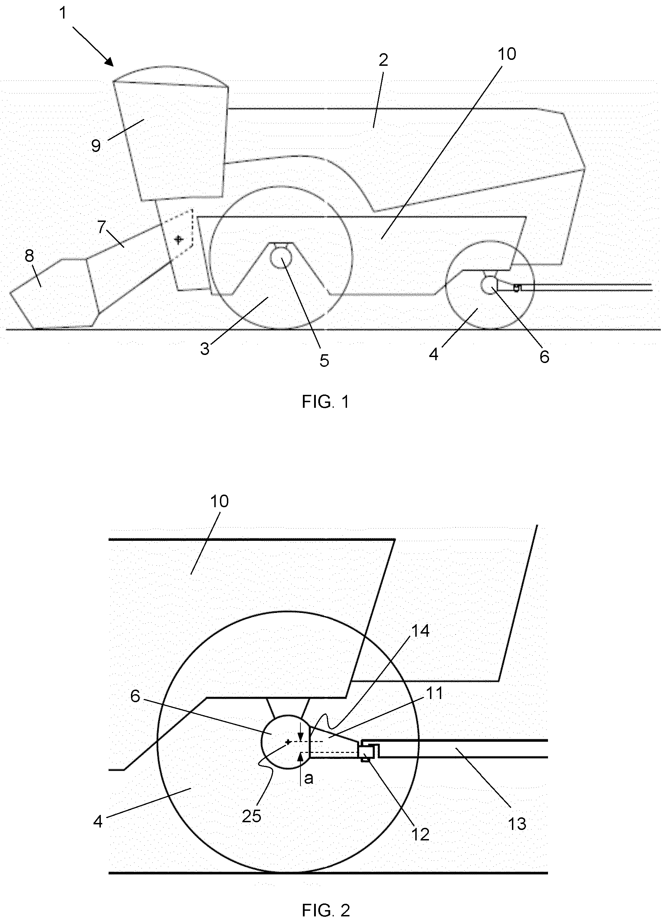

Figure 1 is a simplified side view of a combine harvester 1 in accordance with an embodiment of the invention. The harvester comprises a main body 2 supported on two front wheels 3 and two rear wheels 4, respectively coupled to the outer ends of a front axle 5 and a rear axle 6. The harvester is driven by an operator seated in a cabin 9. At the front of the main body 2, a feeder 7 is mounted which carries at its front side a detachable header 8. The header 8 comprises a set of knives to cut crops from a field as well as an auger or draper belts for collecting the cut crops towards a central area, at which point the crops enter the feeder 7. The feeder comprises a crop transport system, usually including one or more chains with slats, which move the crops upwards and deliver them into the main body 2, where one or more threshing rotors as well as a cleaning section are present for separating grains from plant residue.

The main body 2 comprises the harvester chassis 10, drawn schematically in Figure 1 as a structure that is supported by the front axle 5 and the rear axle 6. The rear axle 6 is a steering axle in the sense that the rear wheels 4 are steerable wheels, i.e. they are pivotable relative to the steering axle by turning a steering wheel or handle in the cabin 9, in order to maneuver the combine along a given path through a field or on the road. The rear wheels 4 are rotatable about colinear rotation axes passing through the center points 25 of the wheels 4.

Attached to the rear axle 6 is a hitch assembly shown in more detail in Figure 2. The assembly comprises a hitch support 11 and a hitch 12 mounted at the outer end of the hitch support 11. A drawbar 13 is coupled to the hitch 12. The drawbar 13 is configured to draw forth a trailer or a cart that is not shown as such in the drawing. The hitch support 11, the hitch 12 itself and the drawbar 13 are represented schematically and in simplified fashion. The actual shape of the hitch 12 may be in accordance with any known hitch system. It may be a ring configured to receive a hook as illustrated in the drawing, or vice versa. The hitch support 11 is preferably a bracket formed of a sufficiently strong material, preferably it is designed as light-weight as possible without disregarding the strength requirements. According to preferred embodiments, the hitch 12 is fixedly but releasably attached to the hitch support 11, but according to alternative embodiments, the hitch 12 may be permanently attached to the support 11 or uniform therewith. According to other embodiments, the hitch 12 is removably attached to the hitch support 11, and the latter is provided with at least two different attachment positions for attaching the hitch 12 at different heights.

Characteristically, the hitch assembly 11+12 is directly attached to the rear axle 6 and therefore not to the chassis 10 as in presently known harvesters. As illustrated in the drawings, the hitch support 11 may be attached to a planarized side face 14 of the rear axle 6, for example by releasable bolt connections, or possibly localized planarized side faces are provided for each bolt connection. However, any other direct connection of the support 11 to the rear axle 6 is possible within the scope of the invention. The hitch support 11 is preferably removably attached to the rear axle 6, for example with said bolt connections or equivalent releasable connections. However, the invention scope also includes embodiments wherein the hitch support 11 is permanently attached to the rear axle 6, for example by welding or casting.

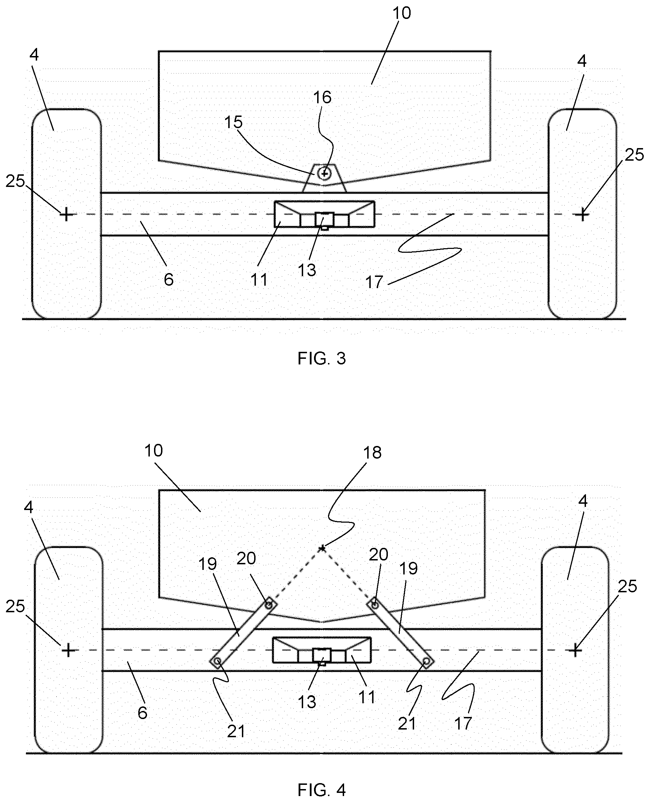

As seen in the rear view in Figure 3, the rear axle 6 is connected to the chassis by a pivot pin 15, so that the axle 6 can pivot about the central axis 16 of the pin 15. Said pivot axis 16 is oriented in the rear to front direction of the harvester. As known in the prior art and stated in the introduction, the ability of the rear axle 6 to pivot enables the rear wheels 4 to maintain contact with the ground on uneven terrain. In the embodiment illustrated in Figure 3, the pivot axis 16 is located at a considerable distance above the line 17 connecting the centre points 25,25' of the rear wheels 4. According to preferred embodiments, said distance is preferably higher than 5 cm, with further preferred ranges stated in the section 'summary of the invention'. In such a configuration, the attachment of the hitch assembly 11+12 to the rear axle 6 ensures that the hitch 12 follows the angular displacement of the axle 6 relative to the chassis 10 when the harvester drives on uneven terrain, so that excessive stresses on the drawbar 13 are avoided and resulting in a more smooth and safe ride of the trailer or cart as it is being pulled by the harvester. Also, as the chassis 10 is in a higher position compared to current designs having a lower pivot axis, attaching the hitch to the chassis would result in a slanted position of the drawbar 13 rather than the preferred horizontal position illustrated in Figures 1 and 2. While this could be overcome by designing a hitch support that spans a certain height difference between the attachment location of the support and the location of the hitch, such a support would result in an impermissible increase of the forces acting on the chassis when towing the considerable weight of for example a detachable header, loaded on the trailer.

The direct attachment of the hitch assembly to the rear axle solves both of these problems. Forces resulting from towing a heavy load are not acting directly on the chassis 10, but are acting directly on the rear axle 6 before being transferred to the chassis, which puts less stress on the connections between the chassis and the axle. Also, the direct attachment of the hitch assembly to the rear axle automatically results in a lower position of the hitch 12 so that a horizontal or close to horizontal orientation of the drawbar 13 is facilitated without causing excessive stresses on the chassis.

According to embodiments of the invention, and as exemplified by the embodiment shown in the drawings, the hitch 12 itself may be located below the line 17 between the centre points 25 of the rear wheels 4, at a distance 'a' from said line, as illustrated in Figure 2. The distance 'a' is measured from the line 17 to the midpoint of the height of the hitch 12. According to various embodiments, this distance 'a' is higher than 5 cm, or higher than 10 cm, or higher than 15 cm. When the hitch 12 is attachable to the hitch support 11 at different heights, the distance 'a' is adaptable within a range of values determined by the different attachment positions of the hitch 12.

According to embodiments of the invention, the rear wheels 4 are actively driven. Actively driven rear wheels on a pivotable rear axle are known as such, but the combination thereof with the direct attachment of the hitch assembly to the rear axle is particularly advantageous. This is because the traction force of the actively driven wheels on the axle is transferred directly to the hitch and thereby to the towed trailer or cart. When the hitch is attached to the chassis, the traction forces generated by an actively driven set of rear wheels would be transferred through the chassis to the hitch which is likely to cause high stresses on the chassis and on the connection between the chassis and the rear axle.

According to embodiments of the invention, the hitch assembly further comprises a socket configured to supply electricity generated by the work vehicle to an electrical connector and/or to transmit signals from the work vehicle to a trailer or vice versa, when plugged in the socket. The socket may be realized according to any known embodiment thereof.

Figure 4 shows an embodiment wherein the rear axle 6 is pivotable about a virtual pivot axis 18, positioned considerably higher than the pivot axis in the embodiment of Figure 3. The mechanism to realize such a virtual pivot axis is known as such (see CPC B60G 9/022) and not shown here in detail. The known mechanism comprises support arms 19 coupled to the chassis by hinges 20 and to the steering axle 6 by hinges 21. The virtual pivot axis 18 lies at the intersection of the central axes of the support arms 19.

In the embodiment of Figure 4, the direct attachment of the hitch assembly to the rear axle 6 is particularly advantageous in view of the higher location of the virtual pivot axis 18.

The invention is not limited to combine harvesters, but is also applicable for example to forage harvesters or cotton harvesters.

## Claims

1. A work vehicle (1) comprising a front axle (5), a rear axle (6), and a chassis (10) supported by said front and rear axles, wherein the rear axle (6) is a steering axle in the sense that steerable wheels (4) are coupled to the ends of the rear axle (6), and wherein the rear axle (6) is pivotable relative to the chassis (10) about a pivot axis (16,18) oriented in the rear-to-front direction of the work vehicle (1), the work vehicle further comprising a hitch assembly comprising a hitch support (11) and a hitch (12),
**characterized in that** the hitch support (11) is directly attached to the rear axle (6) and behaves as a single body together with the rear axle (6).

2. The work vehicle according to claim (1), wherein the hitch (12) is a trailer hitch.

3. The work vehicle (1) according to claim 1 or 2, wherein said pivot axis (16,18) is positioned at least 5 cm above the line (17) that connects the centre points (25) of the steerable wheels (4) of the rear axle (6).

4. The work vehicle (1) according to claim 3, wherein the rear axle (6) is connected to the chassis (10) by a pivot pin (15) with said pivot axis (16) being the central axis of the pivot pin (15) or by any pivotable connection equivalent to said pivot pin (15).

5. The work vehicle (1) according to claim 3, wherein the rear axle (6) is connected to the chassis (10) by a virtual pivot connection so that the axle is pivotable about a virtual pivot axis (18).

6. The work vehicle according to any one of the preceding claims, wherein the hitch support (11) is attached to the rear axle (6) by releasable attachment means.

7. The work vehicle according to any one of the preceding claims, wherein the hitch support (11) has at least two positions with different height for mounting the hitch (12).

8. The work vehicle according to any one of the preceding claims, wherein the steerable wheels (4) of the rear axle are configured to be usable as actively driven wheels.

9. The work vehicle according to any one of the preceding claims, wherein the hitch (12) is positioned below the line (17) that connects the centre points (25) of the steerable wheels (4) of the rear axle (6), preferably at least 5 cm below said line.

10. The work vehicle according to any one of the preceding claims, wherein the hitch assembly further comprises a socket configured to supply electricity generated by the work vehicle to an electrical connector and/or to transmit signals from the work vehicle to a towed vehicle or vice versa, when plugged in the socket.

11. The work vehicle according to any one of the preceding claims, wherein said work vehicle is a combine harvester (1).

12. The work vehicle according to any one of the claims 1 to 10, wherein said work vehicle is a forage harvester or a cotton harvester.

## Patentansprüche

1. Arbeitsfahrzeug (1), umfassend eine Vorderachse (5), eine Hinterachse (6) und ein Fahrgestell (10), das von der Vorder- und Hinterachse getragen wird, wobei die Hinterachse (6) eine Lenkachse in dem Sinne ist, dass lenkbare Räder (4) an die Enden der Hinterachse (6) gekoppelt sind, und wobei die Hinterachse (6) relativ zu dem Fahrgestell (10) um eine Schwenkachse (16,18) schwenkbar ist, die in der Heck-Front-Richtung des Arbeitsfahrzeugs (1) ausgerichtet ist, wobei das Arbeitsfahrzeug ferner eine Kupplungsanordnung umfasst, die eine Kupplungshalterung (11) und eine Kupplung (12) umfasst,
**dadurch gekennzeichnet, dass** die Kupplungshalterung (11) direkt an der Hinterachse (6) befestigt ist und sich zusammen mit der Hinterachse (6) wie ein einziger Körper verhält.

2. Arbeitsfahrzeug nach Anspruch (1), wobei die Kupplung (12) eine Anhängerkupplung ist.

3. Arbeitsfahrzeug (1) nach Anspruch 1 oder 2, wobei die Schwenkachse (16,18) mindestens 5 cm oberhalb der Linie (17) positioniert ist, die die Mittelpunkte (25) der lenkbaren Räder (4) der Hinterachse (6) verbindet.

4. Arbeitsfahrzeug (1) nach Anspruch 3, wobei die Hinterachse (6) mit dem Fahrgestell (10) durch einen Schwenkbolzen (15), wobei die Schwenkachse (16) die Mittelachse des Schwenkbolzens (15) ist, oder durch eine beliebige schwenkbare Verbindung, die dem Schwenkbolzen (15) entspricht, verbunden ist.

5. Arbeitsfahrzeug (1) nach Anspruch 3, wobei die Hinterachse (6) mit dem Fahrgestell (10) durch eine virtuelle Schwenkverbindung verbunden ist, sodass die Achse um eine virtuelle Schwenkachse (18) schwenkbar ist.

6. Arbeitsfahrzeug nach einem der vorstehenden Ansprüche, wobei die Kupplungshalterung (11) mittels lösbarem Befestigungsmittel an der Hinterachse (6) befestigt ist.

7. Arbeitsfahrzeug nach einem der vorstehenden Ansprüche, wobei die Kupplungshalterung (11) mindestens zwei Positionen mit unterschiedlicher Höhe zum Montieren der Kupplung (12) aufweist.

8. Arbeitsfahrzeug nach einem der vorstehenden Ansprüche, wobei die lenkbaren Räder (4) der Hinterachse konfiguriert sind, um als aktiv angetriebene Räder verwendbar zu sein.

9. Arbeitsfahrzeug nach einem der vorstehenden Ansprüche, wobei die Kupplung (12) unterhalb der Linie (17) positioniert ist, die die Mittelpunkte (25) der lenkbaren Räder (4) der Hinterachse (6) verbindet, vorzugsweise mindestens 5 cm unterhalb der Linie.

10. Arbeitsfahrzeug nach einem der vorstehenden Ansprüche, wobei die Kupplungsanordnung ferner eine Buchse umfasst, die konfiguriert ist, um von dem Arbeitsfahrzeug erzeugte Elektrizität an einen elektrischen Steckverbinder zu liefern und/oder Signale von dem Arbeitsfahrzeug an ein gezogenes Fahrzeug oder umgekehrt zu übertragen, wenn es in die Buchse eingesteckt ist.

11. Arbeitsfahrzeug nach einem der vorstehenden Ansprüche, wobei das Arbeitsfahrzeug ein Mähdrescher (1) ist.

12. Arbeitsfahrzeug nach einem der Ansprüche 1 bis 10, wobei das Arbeitsfahrzeug ein Feldhäcksler oder ein Baumwollpflücker ist.

## Revendications

1. Véhicule de travail (1) comprenant un essieu avant (5), un essieu arrière (6) et un châssis (10) supporté par lesdits essieux avant et arrière, dans lequel l'essieu arrière (6) est un essieu directeur en ce sens que des roues directrices (4) sont accouplées aux extrémités de l'essieu arrière (6), et dans lequel l'essieu arrière (6) peut pivoter par rapport au châssis (10) autour d'un axe de pivotement (16, 18) orienté dans la direction arrière-avant du véhicule de travail (1), le véhicule de travail comprenant en outre un ensemble attelage comprenant un support d'attelage (11) et un attelage (12),
**caractérisé en ce que** le support d'attelage (11) est directement fixé à l'essieu arrière (6) et se comporte comme un seul corps conjointement avec l'essieu arrière (6).

2. Véhicule de travail selon la revendication (1), dans lequel l'attelage (12) est un attelage de remorque.

3. Véhicule de travail (1) selon la revendication 1 ou 2, dans lequel ledit axe de pivotement (16, 18) est positionné à au moins 5 cm au-dessus de la ligne (17) qui relie les points centraux (25) des roues directrices (4) de l'essieu arrière (6).

4. Véhicule de travail (1) selon la revendication 3, dans lequel l'essieu arrière (6) est relié au châssis (10) par un tourillon (15) avec ledit axe de pivotement (16) étant l'axe central du tourillon (15) ou par toute liaison pivotante équivalente audit tourillon (15).

5. Véhicule de travail (1) selon la revendication 3, dans lequel l'essieu arrière (6) est relié au châssis (10) par une liaison de pivotement virtuelle de sorte que l'essieu peut pivoter autour d'un axe de pivotement virtuel (18).

6. Véhicule de travail selon l'une quelconque des revendications précédentes, dans lequel le support d'attelage (11) est fixé à l'essieu arrière (6) par un moyen d'attache amovible.

7. Véhicule de travail selon l'une quelconque des revendications précédentes, dans lequel le support d'attelage (11) a au moins deux positions avec une hauteur différente pour le montage de l'attelage (12).

8. Véhicule de travail selon l'une quelconque des revendications précédentes, dans lequel les roues directrices (4) de l'essieu arrière sont conçues pour être utilisées en tant que roues à entraînement actif.

9. Véhicule de travail selon l'une quelconque des revendications précédentes, dans lequel l'attelage (12) est positionné en dessous de la ligne (17) qui relie les points centraux (25) des roues directrices (4) de l'essieu arrière (6), de préférence au moins 5 cm en dessous de ladite ligne.

10. Véhicule de travail selon l'une quelconque des revendications précédentes, dans lequel l'ensemble d'attelage comprend en outre une prise conçue pour fournir de l'électricité générée par le véhicule de travail à un connecteur électrique et/ou pour transmettre des signaux du véhicule de travail à un véhicule remorqué ou vice versa, lorsqu'il est branché dans la prise.

11. Véhicule de travail selon l'une quelconque des revendications précédentes, dans lequel ledit véhicule de travail est une moissonneuse-batteuse (1).

12. Véhicule de travail selon l'une quelconque des revendications 1 à 10, dans lequel ledit véhicule de travail est une récolteuse de fourrage ou une récolteuse de coton.
